# EUROPEAN PATENT APPLICATION

(11) **EP 4 570 425 A1**
(43) Date of publication of application: **18.06.2025**
(21) Application number: 24218016.4
(22) Date of filing: 06.12.2024
(51) Int. Cl.: B23Q 1/58, B23Q 11/08

(54) **CUTTING MACHINE WITH A SLIDING COVER**

(30) Priority: 14.12.2023 JP 2023211032
(71) Applicant: DGSHAPE Corporation, Hamamatsu-shi, Shizuoka 431-2103 (JP)
(72) Inventor: Dodo, Shinpei, Hamamatsu-shi, Shizuoka, 431-2103 (JP)
(74) Representative: Grünecker Patent- und Rechtsanwälte PartG mbB

(57) **Abstract**

A cutting machine (100) includes: a case body (10) including a first opening (12a) defined in front of a machining chamber (A1) in which a workpiece (5) is to be cut; a slider cover (60); and a slide rail (70) which is disposed laterally of the first opening (12a) and with which the slider cover (60) is in engagement. The slide rail (70) extends from front rearward and from below upward. Accordingly, rearward and upward movement of the slider cover (60) uncovers the first opening (12a). In this case, cutting powder (CP) adhering to a rear surface of the slider cover (60) falls down into the machining chamber (A1) through the first opening (12a). The slide rail (70) is disposed laterally of the first opening (12a) such that the cutting powder (CP) does not adhere to the slide rail (70). Consequently, the cutting powder (CP) is unlikely to spill out of the cutting machine (100).

## Description

### BACKGROUND OF THE INVENTION

### Field of the Invention

The present invention relates to cutting machines.

### Description of the Related Art

Cutting machines known in the related art fabricate, for example, dental molded articles by cutting that involves bringing machining tools into contact with workpieces. Such a cutting machine produces cutting powder during execution of cutting. As used herein, the term "cutting powder" refers to any form of powder resulting from cutting. To prevent such cutting powder from spilling out of the cutting machine, the cutting machine has its machining tool covered with, for example, a front cover (or a slide cover). JP 2017-142617A, for example, discloses a cutting machine including a machining tool and a front cover. The machining tool is housed in an internal space defined by the front cover and walls of the cutting machine. The cutting machine produces cutting powder upon execution of cutting but prevents, with its front cover, such cutting powder from spilling out of the cutting machine during cutting.

Cutting powder is gradually accumulated on portion(s) of the front cover facing the internal space. When, for example, a slide rail along which the front cover slides is attached to the cutting machine, cutting powder is accumulated also on the slide rail. If a relatively large amount of cutting powder is accumulated on the front cover and/or the slide rail, the cutting powder may spill out of the cutting machine when an operator opens the front cover in order to remove a workpiece from the cutting machine.

### SUMMARY OF THE INVENTION

Accordingly, embodiments of the present invention provide cutting machines each of which is unlikely to cause cutting powder to spill out therefrom upon opening and/or closing of a slide cover.

The present invention is defined in independent claim 1. Preferred embodiments are laid down in the dependent claims. A cutting machine according to the present invention includes: a case body internally provided with a machining chamber in which a workpiece is to be cut, the case body including an opening defined in front of the machining chamber; a slider cover which is provided in front of the case body and is able to cover and uncover the opening; and a slide rail which is provided on a portion of the case body located laterally of the opening and with which the slider cover is in engagement, the slide rail extending from front rearward and from below upward, wherein the opening is uncovered upon rearward and upward movement of the slider cover.

In the cutting machine according to the present invention, cutting powder adheres to portion(s) of the slider cover facing the machining chamber upon machining of the workpiece in the machining chamber. The slider cover is in engagement with the slide rail extending from front rearward and from below upward and is movable along the slide rail. Upon rearward and upward movement of the slider cover, the opening is uncovered. The slider cover is provided in front of the opening. Accordingly, if the cutting powder adheres to the slider cover, the cutting powder that falls down from the slider cover during opening and/or closing of the slider cover falls down into the machining chamber through the opening. The slide rail is disposed laterally of the opening. Thus, if the cutting powder is scattered forward of the opening, the cutting powder is prevented from adhering to the slide rail. Consequently, the cutting powder is prevented from spilling out of the cutting machine.

Various embodiments of the present invention provide cutting machines each of which is unlikely to cause cutting powder to spill out therefrom upon opening and/or closing of a slide cover.

### BRIEF DESCRIPTION OF THE DRAWINGS

FIG. 1 is a perspective view of a cutting machine according to an embodiment of the present invention.
FIG. 2 is a vertical cross-sectional view of the cutting machine from a left-side perspective.
FIG. 3 is a vertical cross-sectional view of the cutting machine from a right-side perspective.
FIG. 4 is a perspective view of the cutting machine, with its slider cover opened.
FIG. 5 is a plan view of a workpiece holder.
FIG. 6 is an enlarged view of a portion of the cutting machine illustrated in FIG. 2, which is located adjacent to a left inner wall.
FIG. 7 is a perspective view of the slide cover.
FIG. 8 is a rear view of the slide cover.
FIG. 9 is a cross-sectional view of the slide cover taken along the line A-A of FIG. 8.
FIG. 10 is a cross-sectional view of the slide cover taken along the line B-B of FIG. 8.
FIG. 11 is a cross-sectional view of a portion of the cutting machine located adjacent to the slider cover, with a first opening uncovered.
FIG. 12 is a diagram illustrating a portion of the cutting machine located adjacent to the left inner wall, with the slider cover moved to its uppermost position.

### DETAILED DESCRIPTION OF THE PREFERRED EMBODIMENTS

A cutting machine according to an embodiment of the present invention will be described below with reference to the drawings. The embodiment described below is not intended to limit the invention in any way. Components and elements having the same functions are identified by the same reference signs, and will be described briefly or will not be described when deemed redundant.

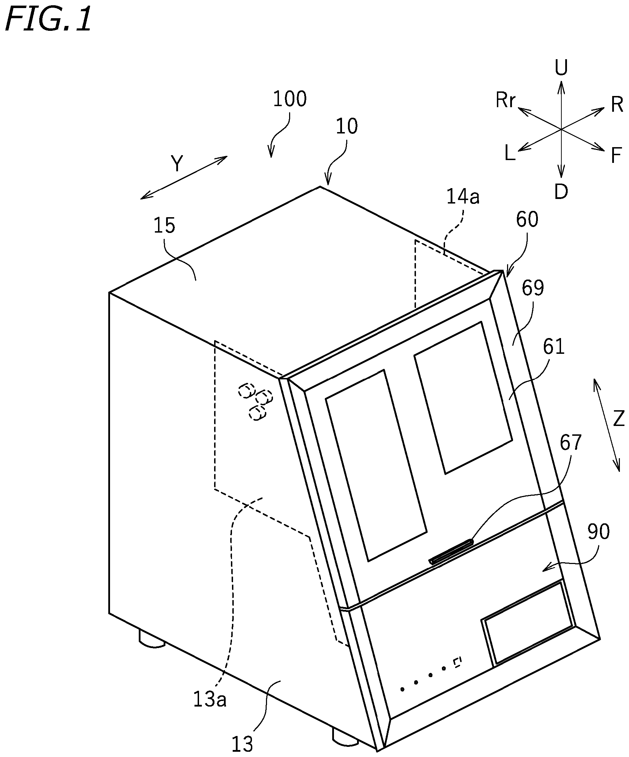

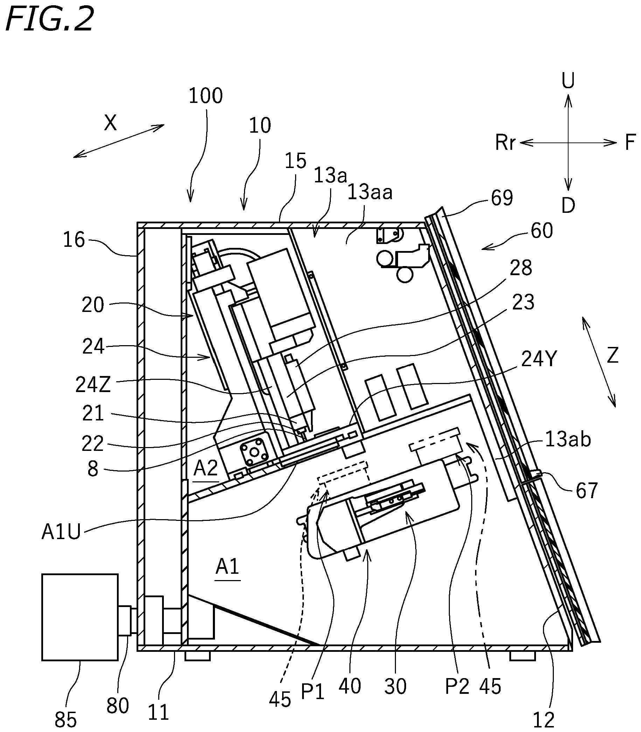

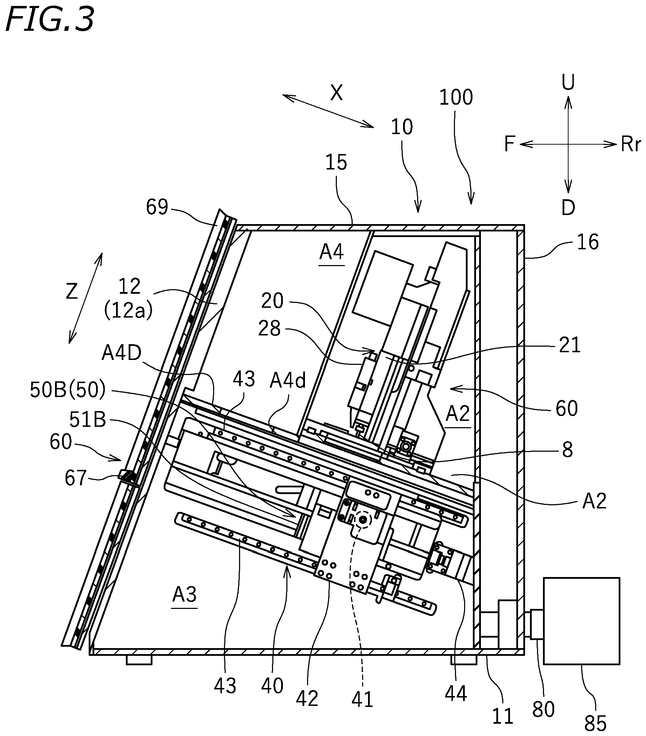

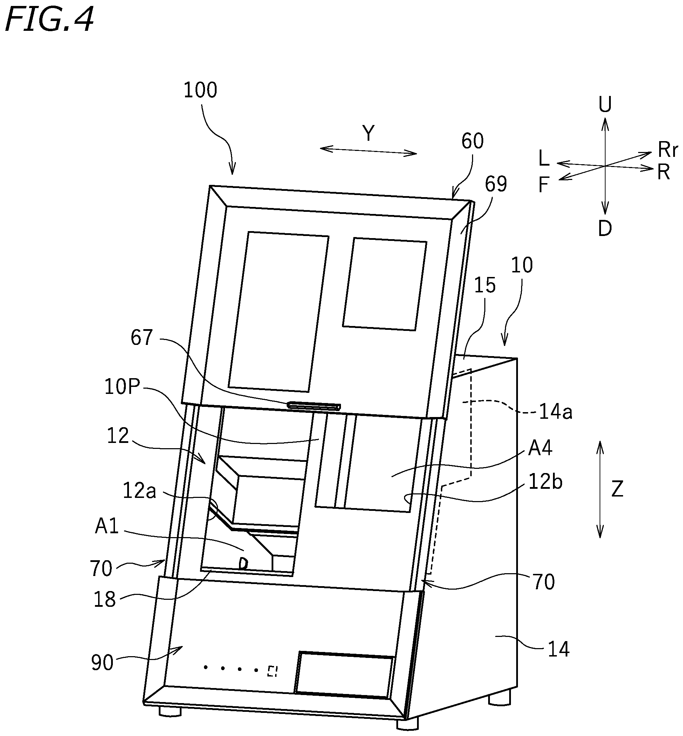

FIG. 1 is a perspective view of a cutting machine 100 according to the present embodiment. FIG. 2 is a vertical cross-sectional view of the cutting machine 100 from a left-side perspective. FIG. 3 is a vertical cross-sectional view of the cutting machine 100 from a right-side perspective. FIG. 4 is a perspective view of the cutting machine 100, with its slider cover 60 opened. The reference signs F, Rr, L, R, U, and D in the drawings respectively represent forward, rearward, leftward, rightward, upward, and downward directions with respect to the cutting machine 100. These directions, however, are defined for the sake of convenience of description and do not limit how the cutting machine 100 may be installed or how the present invention may be practiced.

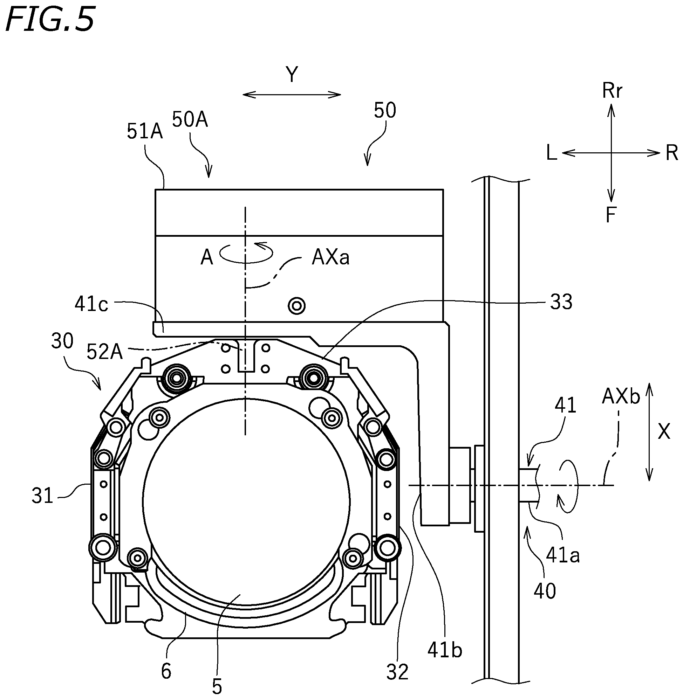

In the present embodiment, the cutting machine 100 cuts a workpiece 5 (see FIG. 5) so as to fabricate an object. Although the object to be fabricated in this embodiment may be any type of object, the object is, for example, a dental prosthetic. Examples of such a dental prosthetic include an inlay, a crown, and a bridge. In the present embodiment, the cutting machine 100 is used in a dental field and fabricates a dental prosthetic from the workpiece 5. Alternatively, the cutting machine 100 may be used in any field other than the dental field.

As illustrated in FIG. 1, the cutting machine 100 includes a case body 10. The case body 10 has a box shape in which an internal space is defined. As illustrated in FIG. 2, the case body 10 is internally provided with: a machining chamber A1 in which a workpiece holder 30 to hold the workpiece 5 (see FIG. 5) is housed; and a housing chamber A2 in which a cutting device 20 is housed. The machining chamber A1 is a region where the workpiece 5 is to be cut. The housing chamber A2 is located above the machining chamber A1. A first opening 12a (see FIG. 4), which will be described below, is defined in front of the machining chamber A1. Through the first opening 12a, the machining chamber A1 is in communication with the outside of the cutting machine 100. As illustrated in FIG. 3, the case body 10 is internally provided with: a driving device chamber A3 in which a holder moving device 40 to move the workpiece holder 30 and a tool storage 45 (see FIG. 2) are housed; and a tool changing chamber A4 disposed in front of the housing chamber A2. A second opening 12b (see FIG. 4), which will be described below, is defined in front of the tool changing chamber A4. Through the second opening 12b, the tool changing chamber A4 is in communication with the outside of the cutting machine 100. As illustrated in FIG. 4, the case body 10 is provided on its front surface with the slider cover 60 such that the slider cover 60 is openable and closable. The case body 10 is provided with slide rails 70 with which the slider cover 60 is in engagement. The slide rails 70 each extend from front rearward and from below upward. An operation panel 90 is provided below the slider cover 60. A user performs cutting-related operations through the operation panel 90.

As illustrated in FIG. 2, the case body 10 includes a bottom wall 11, a front wall 12, a left wall 13 (see FIG. 1), a right wall 14 (see FIG. 4), a top wall 15, and a rear wall 16. These components of the case body 10 are made of steel plates or other materials. The bottom wall 11 extends in a front-rear direction and a right-left direction and defines a bottom surface of the cutting machine 100. A left end of the bottom wall 11 is connected with the left wall 13. The left wall 13 extends in an up-down direction from the left end of the bottom wall 11. The right wall 14 is connected to a right end of the bottom wall 11. The right wall 14 extends in the up-down direction from the right end of the bottom wall 11. The rear wall 16 is connected to a rear end of the bottom wall 11. The rear wall 16 extends in the up-down direction from the rear end of the bottom wall 11. A left end of the rear wall 16 is connected to a rear end of the left wall 13. A right end of the rear wall 16 is connected to a rear end of the right wall 14. The top wall 15 is provided in parallel or substantially in parallel with the bottom wall 11. The top wall 15 is connected to upper ends of the left wall 13, the right wall 14, and the rear wall 16. A front end of the bottom wall 11 is connected with the front wall 12. The front wall 12 extends upward from the front end of the bottom wall 11 while inclining rearward. The direction in which the front wall 12 extends may hereinafter be also referred to as a "Z-axis direction". Unless otherwise specified, upward in the Z-axis direction may hereinafter be simply referred to as "upward", and downward in the Z-axis direction may hereinafter be simply referred to as "downward". A left end of the front wall 12 is connected to the left wall 13. A right end of the front wall 12 is connected to the right wall 14. As illustrated in FIG. 4, the case body 10 includes a pillar 10P located at a substantially intermediate position in the right-left direction and extending in the up-down direction. The pillar 10P extends in the up-down direction and extends rearward (i.e., downward in an X-axis direction, which will be described below). The pillar 10P is located forward of the housing chamber A2 (see FIG. 2).

As illustrated in FIG. 4, the front wall 12 is provided with the first opening 12a and the second opening 12b. The first opening 12a is an example of an opening according to the present invention. In the present embodiment, the first opening 12a and the second opening 12b each have a rectangular shape in a front view. The first opening 12a is defined in front of the machining chamber A1. The second opening 12b is defined in front of the tool changing chamber A4. The first opening 12a is disposed leftward of the second opening 12b.

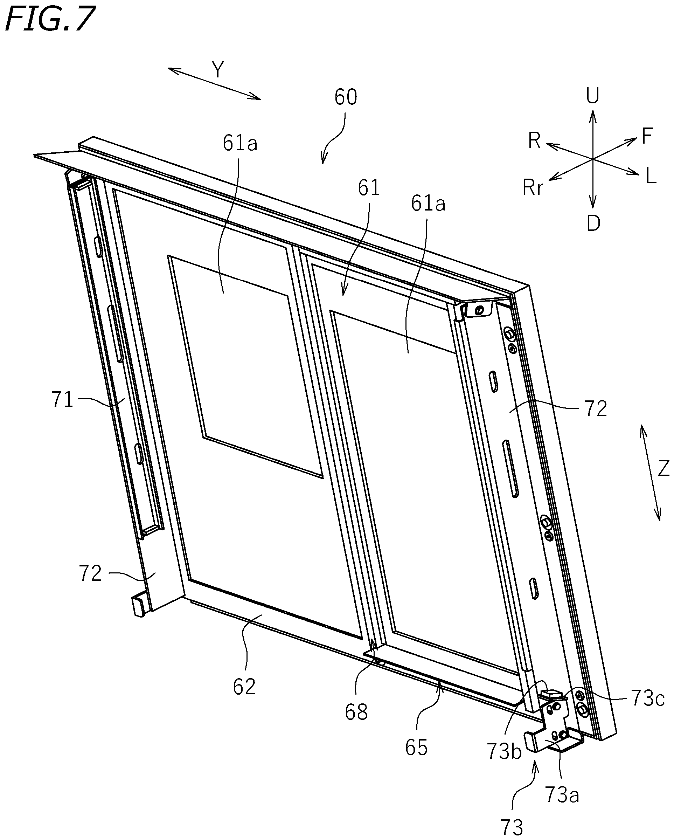

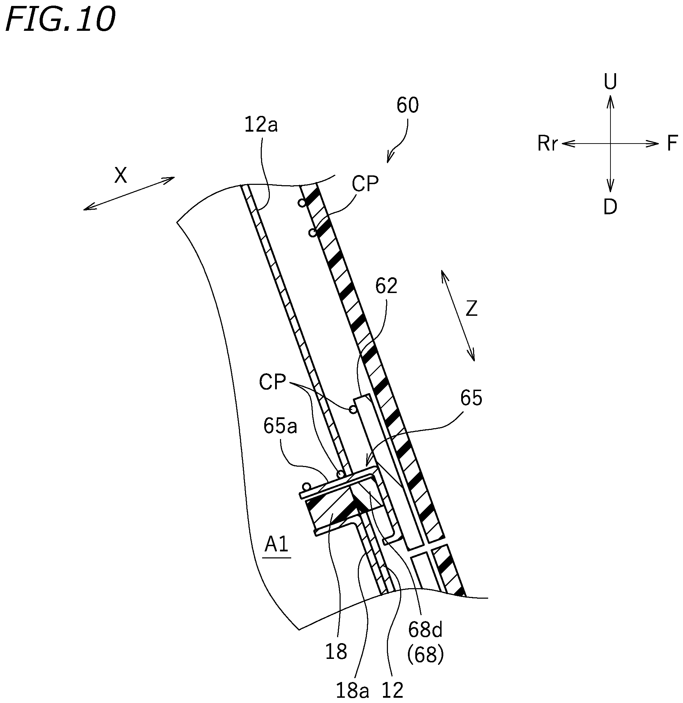

The case body 10 is provided with a dustproof rubber 18. As illustrated in FIG. 4, the dustproof rubber 18 is disposed at a location on a lower end of the first opening 12a. The dustproof rubber 18 prevents scattering of cutting powder produced in the machining chamber A1. Together with a fibrous member 68 (see FIG. 7), which will be described below, the dustproof rubber 18 prevents the cutting powder from spilling out of the first opening 12a. In the present embodiment, the dustproof rubber 18 has a cuboidal shape substantially equal in length in the right-left direction (i.e., a Y-axis direction, which will be described below) to the first opening 12a. Alternatively, the dustproof rubber 18 may have any other suitable shape. In one example, the dustproof rubber 18 is placed on a placement table 18a (see FIG. 10) attached to a portion of the front wall 12 adjacent to the machining chamber A1. Alternatively, the dustproof rubber 18 may be placed in any other suitable method.

As illustrated in FIG. 1, a left inner wall 13a is provided to the right of the left wall 13. The left inner wall 13a is disposed leftward of the first opening 12a (see FIG. 4). As illustrated in FIG. 2, the left inner wall 13a includes: an upper portion 13aa located in front of the housing chamber A2; and a lower portion 13ab extending downward from the upper portion 13aa along the front wall 12 of the case body 10. As illustrated in FIG. 4, a right inner wall 14a is provided to the left of the right wall 14. The right inner wall 14a is provided rightward of the second opening 12b. In other words, the right inner wall 14a is provided rightward of the first opening 12a.

FIG. 5 is a plan view of the workpiece holder 30. The workpiece holder 30 holds the workpiece 5. In this embodiment, the workpiece holder 30 holds the workpiece 5 through an adapter 6. Alternatively, the workpiece holder 30 may directly hold the workpiece 5 without the intervention of any other component. As illustrated in FIG. 5, the workpiece holder 30 includes a pair of a left arm 31 and a right arm 32. The adapter 6 is inserted between the pair of arms 31 and 32 and thus held by the workpiece holder 30.

The workpiece 5 has, for example, a disk shape. The workpiece 5 is made of, for example, any one or more of materials of the following types: zirconia; polymethyl methacrylate (PMMA) resin; hybrid resin; polyether ether ketone (PEEK) resin; and gypsum. When the type of material used for the workpiece 5 is zirconia, simi-sintered zirconia, for example, is used. Alternatively, the workpiece 5 may have any other suitable shape and may be made of any other suitable material.

The holder moving device 40 moves the workpiece holder 30 while holding the workpiece holder 30. In the present embodiment, the holder moving device 40 moves the workpiece holder 30 in the front-rear direction. More specifically, the holder moving device 40 moves the workpiece holder 30 diagonally in the front-rear direction as illustrated in FIG. 2. Upon being moved forward by the holder moving device 40, the workpiece holder 30 also moves upward. Upon being moved rearward by the holder moving device 40, the workpiece holder 30 also moves downward. The direction in which the workpiece holder 30 is to be moved by the holder moving device 40 may hereinafter be also referred to as the "X-axis direction". Unless otherwise specified, forward in the X-axis direction may hereinafter be simply referred to as "forward", and rearward in the X-axis direction may hereinafter be simply referred to as "rearward". As illustrated in FIG. 5, the holder moving device 40 is connected to a rotary device 50 (which will be described below).

The holder moving device 40 includes a supporting arm 41 extending in the right-left direction and supporting the workpiece holder 30. As illustrated in FIG. 3, the holder moving device 40 includes: an X-axis direction movable body 42 connected to the supporting arm 41; a pair of X-axis guide rails 43; and an X-axis direction drive motor 44. The holder moving device 40 moves the supporting arm 41 in the X-axis direction so as to move the workpiece holder 30 in the X-axis direction. In this embodiment, the X-axis direction movable body 42, the pair of X-axis guide rails 43, the X-axis direction drive motor 44, and a portion of the supporting arm 41 of the holder moving device 40 are housed in the driving device chamber A3.

The pair of X-axis guide rails 43 extend in the X-axis direction. The X-axis direction movable body 42 is in slidable engagement with the pair of X-axis guide rails 43. The X-axis direction movable body 42 is movable in the X-axis direction along the X-axis guide rails 43. Although not illustrated, the X-axis direction movable body 42 is connected to, for example, a ball screw. In other words, the holder moving device 40 includes a ball screw mechanism. The X-axis direction drive motor 44 rotates the ball screw. Upon actuation of the X-axis direction drive motor 44, the X-axis direction movable body 42 moves in the X-axis direction along the X-axis guide rails 43. The holder moving device 40 does not necessarily have to include a ball screw mechanism but may alternatively include, for example, a timing belt and/or a wire.

As illustrated in FIG. 5, the supporting arm 41 includes: a rotary shaft 41a that rotates around an axis AXb extending in the right-left direction; a first arm 41b that is connected to the rotary shaft 41a in a direction perpendicular or substantially perpendicular to the axis AXb and that rotates in the front-rear direction together with the rotary shaft 41a; and a second arm 41c connected to the first arm 41b in a direction parallel or substantially parallel to the axis AXb (i.e., in a direction perpendicular or substantially perpendicular to the first arm 41b). As illustrated in FIG. 3, the X-axis direction movable body 42 is connected with a B-axis rotary motor 51B of a B-axis rotator 50B (which will be described below). The rotary shaft 41a (see FIG. 5) is rotated around the axis AXb (see FIG. 5) by the B-axis rotary motor 51B. Upon rotation of the rotary shaft 41a caused by actuation of the B-axis rotary motor 51B, the workpiece holder 30 rotates in the front-rear direction.

As illustrated in FIG. 5, the rotary device 50 includes: an A-axis rotator 50A to rotate the workpiece holder 30 in the right-left direction; and the B-axis rotator 50B (see FIG. 3) to rotate the workpiece holder 30 in the front-rear direction. The A-axis rotator 50A includes an A-axis rotary motor 51A and a rotary shaft 52A. The A-axis rotary motor 51A is secured to the second arm 41c. The rotary shaft 52A is connected to the A-axis rotary motor 51A (or more specifically, a drive unit including the A-axis rotary motor 51A) and extends in the front-rear direction along an axis AXa. Upon actuation of the A-axis rotary motor 51A, the rotary shaft 52A rotates around the axis AXa. The B-axis rotator 50B includes the B-axis rotary motor 51B. As already mentioned above, the B-axis rotary motor 51B is connected to the X-axis direction movable body 42 and rotates the workpiece holder 30 in the front-rear direction.

The cutting device 20 illustrated in FIG. 2 cuts the workpiece 5. The cutting device 20 cuts the workpiece 5 by bringing a machining tool 8 into contact with the workpiece 5 while rotating the machining tool 8. The cutting device 20 includes: a spindle 21; a tool gripper 22 to grip the machining tool 8; a spindle rotator 23 to rotate the spindle 21; and a moving device 24 that is able to move the spindle 21 in the right-left direction (i.e., the Y-axis direction) and the up-down direction (i.e., the Z-axis direction). The moving device 24 includes a right-left mover 24Y and an up-down mover 24Z. When the workpiece 5 is not being cut, the cutting device 20 is disposed in the housing chamber A2.

The spindle 21 rotates the tool gripper 22 and the machining tool 8, which is gripped by the tool gripper 22, around a longitudinal axis. The spindle 21 extends, for example, in the Z-axis direction. The spindle 21 is connected with the spindle rotator 23. Upon actuation of the spindle rotator 23, the spindle 21 rotates around its central axis extending in the up-down direction (i.e., the Z-axis direction). The spindle rotator 23 is not limited to any particular configuration, structure, or arrangement. The spindle rotator 23 may be, for example, an electric motor.

The tool gripper 22 grips the machining tool 8. The tool gripper 22 is mounted on the spindle 21. More than one machining tool 8 different in diameter and/or cutter portion shape is prepared in advance for the cutting machine 100. The machining tools 8 are stored in the tool storage 45 (which will be described below). The tool gripper 22 selectively grips one of the machining tools 8. Rotation of the spindle 21 around the central axis extending in the up-down direction causes the tool gripper 22 and the machining tool 8, which is gripped by the tool gripper 22, to rotate around a central axis of the machining tool 8.

As illustrated in FIG. 2, the cutting device 20 is provided with an air blower 28. The air blower 28 is provided laterally of the spindle 21. The air blower 28 blows, from its lower end, air in the Z-axis direction. A supply source for air to be blown from the air blower 28 may be any supply source. In one example, the supply source may be a compressor or other equipment disposed outside the cutting machine 100. Blowing air from the air blower 28 during cutting of the workpiece 5 makes it possible to blow off cutting powder produced by cutting of the workpiece 5. Although cutting heat is generated during cutting, the air blower 28 blows air onto the workpiece 5 and the machining tool 8 and thus cools the workpiece 5 and the machining tool 8.

The moving device 24 moves the spindle 21, the tool gripper 22, the spindle rotator 23, and the air blower 28 in the Z-axis direction and the right-left direction. As used herein, the term "right-left direction" refers to a direction perpendicular or substantially perpendicular to the X-axis direction and the Z-axis direction. The right-left direction may hereinafter be also referred to as the "Y-axis direction". The moving device 24 is provided above the workpiece holder 30. The moving device 24 moves the spindle 21, the tool gripper 22, the spindle rotator 23, and the air blower 28 in the Y-axis direction and the Z-axis direction, and the holder moving device 40 moves the workpiece holder 30 in the X-axis direction. This changes the relative positions of the machining tool 8 and the workpiece 5 three-dimensionally. The spindle 21, the tool gripper 22, the spindle rotator 23, and the air blower 28 move in the Z-axis direction and thus arrive in the machining chamber A1 or withdraw to the housing chamber A2. In this embodiment, the machining chamber A1 and the housing chamber A2 are in communication with each other through an opening A1U. The opening A1U has a size that allows passage of the spindle 21, the tool gripper 22, the spindle rotator 23, and the air blower 28 therethrough. When the workpiece 5 undergoes cutting, the moving device 24 moves the spindle 21, the tool gripper 22, the spindle rotator 23, and the air blower 28 to the machining chamber A1.

The moving device 24 includes the right-left mover 24Y and the up-down mover 24Z. Upon actuation of the right-left mover 24Y, the spindle 21, the tool gripper 22, the spindle rotator 23, and the air blower 28 move in the Y-axis direction. Upon actuation of the up-down mover 24Z, the spindle 21, the tool gripper 22, the spindle rotator 23, and the air blower 28 move in the Z-axis direction. The moving device 24 is not limited to any particular configuration, structure, or arrangement. In one example, the right-left mover 24Y may include: guide rail(s) extending in the Y-axis direction; a right-left movable body in slidable engagement with the guide rail(s); a ball screw connected to the right-left movable body; and an electric motor to rotate the ball screw. The up-down mover 24Z may include, for example, a ball screw mechanism similarly to the right-left mover 24Y.

As illustrated in FIG. 2, an exhaust duct 80 is provided through a lower rear portion of the case body 10. The exhaust duct 80 extends out of the case body 10 from the machining chamber A1 inside the case body 10. A dust collector 85 is installed outside the case body 10. The dust collector 85 is connected to an end of the exhaust duct 80 located outside the case body 10. The dust collector 85 is not limited to any particular configuration, structure, or arrangement. In one example, the dust collector 85 is configured to include a fan. In this case, rotation of the fan enables the dust collector 85 to such, through the exhaust duct 80, cutting powder along with air inside the machining chamber A1.

The tool storage 45 is housed in the driving device chamber A3 (see FIG. 3). As illustrated in FIG. 2, the tool storage 45 is a box-shaped member that is able to store the machining tools 8 each having a rod shape. The machining tools 8 are used for different purposes according to, for example, the material(s) of the workpiece 5 and/or the type of cutting to be performed. The tool storage 45 is supported by the X-axis direction movable body 42 (see FIG. 3). Specifically, the tool storage 45 is secured to an upper surface of the X-axis direction movable body 42.

The holder moving device 40 is configured to be able to move the tool storage 45 to a tool gripping position P1 located under the opening A1U. A process for causing the tool gripper 22 to grip the machining tool 8 first involves moving the tool storage 45 to the tool gripping position P1, and then involves moving the tool gripper 22 to a position over the tool gripping position P1. In this state, the up-down mover 24Z is actuated to lower the tool gripper 22. The tool gripper 22 is thus able to grip the machining tool 8 stored in the tool storage 45.

The holder moving device 40 is configured to be able to move the tool storage 45 to a tool changing position P2 located forward of the tool gripping position P1. The tool changing position P2 is located below the tool changing chamber A4 (see FIG. 3). As illustrated in FIG. 3, a bottom wall A4D of the tool changing chamber A4 is provided with an opening A4d located above the tool changing position P2 (see FIG. 2) and defined in the Z-axis direction. Through the opening A4d, the user inserts and extracts the machining tools 8 into and from the tool storage 45. Upon movement of the tool storage 45 to the tool changing position P2 caused by actuation of the holder moving device 40, the user is allowed to reach the tool storage 45 from the tool changing chamber A4 through the opening A4d. Providing the tool changing chamber A4 with the opening A4d prevents the user from accidentally touching the holder moving device 40 during, for example, replacement of the machining tool 8. This arrangement prevents foreign matter from entering the driving device chamber A3 during, for example, replacement of the machining tool 8.

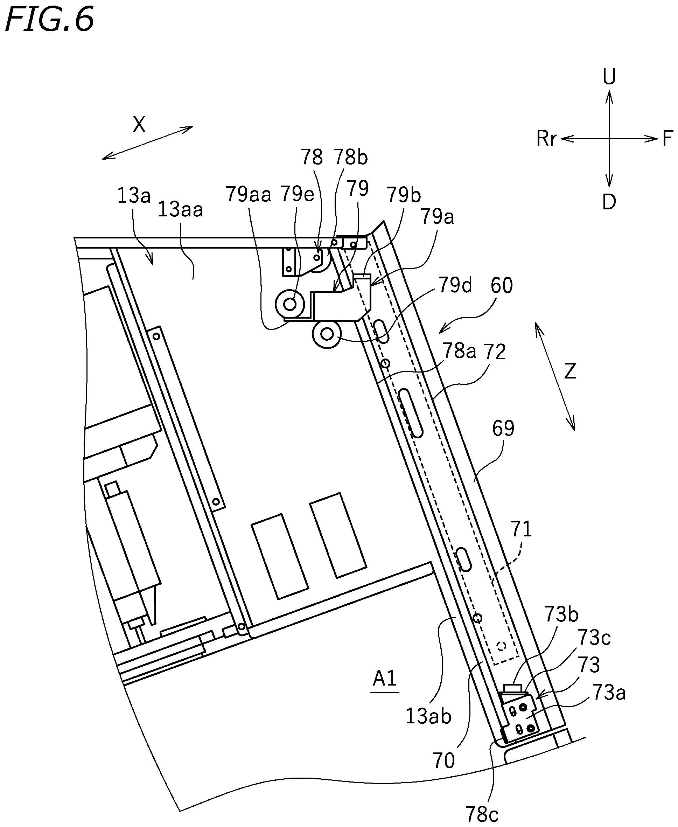

FIG. 6 is an enlarged view of a portion of the cutting machine 100 illustrated in FIG. 2, which is located adjacent to the left inner wall 13a. As illustrated in FIG. 6, one slide rail 70 is attached to a front end of the left inner wall 13a. The slide rail 70 extends in the Z-axis direction. The slide rail 70 is attached to the left inner wall 13a with, for example, a screw. The slide rail 70 is a component with which the slider cover 60 is in engagement. As illustrated in FIG. 4, another slide rail 70 is attached to the right inner wall 14a. The slide rail 70 attached to the right inner wall 14a is similar to the slide rail 70 attached to the left inner wall 13a, except that the slide rails 70 are mirror images of each other.

The left inner wall 13a is provided with a constant load spring 78. The constant load spring 78 applies a constant load to an urged member 73. In the present embodiment, the constant load spring 78 is a spiral spring. The constant load spring 78 includes: a spring member 78a; a drum 78b around which the spring member 78a is wound; and a subplate 78c located at a lower end of the spring member 78a. A portion of the spring member 78a extends in the Z-axis direction, and the other portion of the spring member 78a is wound around the drum 78b. The subplate 78c is attached to a securer 73a of the urged member 73. The subplate 78c and the securer 73a are secured to each other with, for example, a screw. During movement of the slider cover 60 in the Z-axis direction, the constant load spring 78 applies an urging force to the slider cover 60, which is exerted upward in the Z-axis direction through the urged member 73. The urging force is constant irrespective of the length of the spring member 78a unwound from the drum 78b. In one example, the urging force balances with a force resulting from the weight of the slider cover 60 in the Z-axis direction. Accordingly, when the user has moved the slider cover 60 upward and then released his or her hand from the slider cover 60, the slider cover 60 is stationary in the Z-axis direction. The urging force, however, is not limited to any particular magnitude. When the slider cover 60 moves upward or downward in the Z-axis direction, a portion of the spring member 78a is wound around or unwound from the drum 78b.

The left inner wall 13a is provided with a locking unit 79. The locking unit 79 locks movement of the slider cover 60 in the Z-axis direction. The locking unit 79 includes a movable member 79a, a magnetic body 79b, a first stopper 79d, and a second stopper 79e. The movable member 79a is connected to each of outer rails 72 (which will be described below) of the slider cover 60. The movable member 79a is substantially L-shaped in a side view. The movable member 79a includes an extension 79aa extending rearward from a rear portion of the movable member 79a. The movable member 79a is attached to a shaft (not illustrated) secured to the left inner wall 13a and rotatable in the front-rear direction, such that the movable member 79a is rotatable in the front-rear direction. The magnetic body 79b is a component onto which a magnet 73b is to be suctioned upon upward movement of the slider cover 60 in the Z-axis direction. Suctioning of the magnet 73b onto the magnetic body 79b prevents downward movement of the slider cover 60 in the Z-axis direction. Each of the first stopper 79d and the second stopper 79e is a component against which the extension 79aa is to abut. Abutment of the extension 79aa against the first stopper 79d or the second stopper 79e prevents rotation of the movable member 79a. This accordingly limits movement of the slider cover 60.

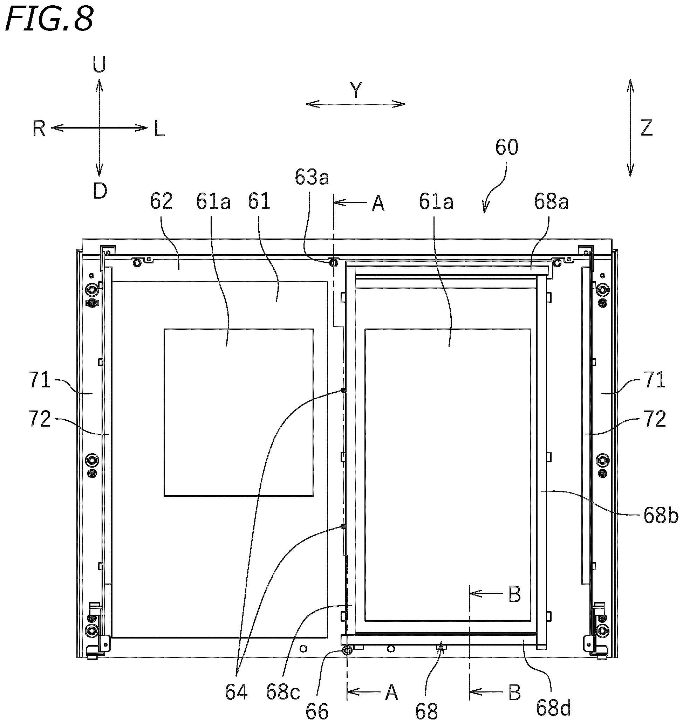

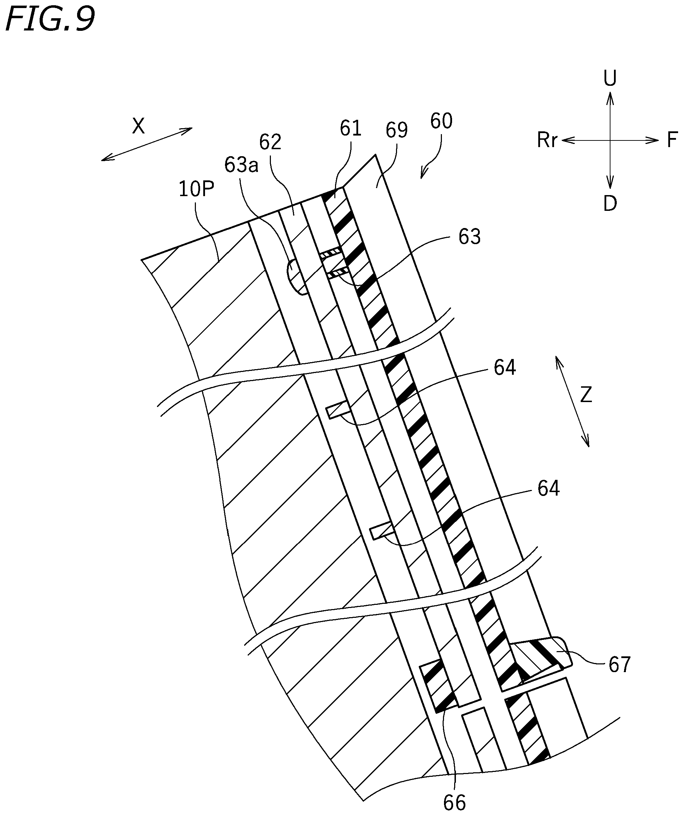

As illustrated in FIG. 4, the slider cover 60 is a component which is provided in front of the case body 10 and by which the first opening 12a and the second opening 12b are openable and closable. The slider cover 60 is in engagement with the slide rails 70 and is configured to be movable in the Z-axis direction. Specifically, the slider cover 60 is configured to be movable in a forward and downward direction or in a rearward and upward direction. The first opening 12a and the second opening 12b are uncovered upon movement of the slider cover 60 in the rearward and upward direction. FIG. 7 is a perspective view of the slider cover 60. FIG. 8 is a rear view of the slider cover 60. The slider cover 60 includes the outer rails 72, inner rails 71, the urged member 73, a panel plate 61, a sheet metal 62, a resin washer 63 (see FIG. 9), spacers 64, an extending plate 65 (see FIG. 10), a rubber bushing 66, a handle 67 (see FIG. 9), the fibrous member 68, and a frame 69 (see FIG. 9).

As illustrated in FIG. 7, the outer rails 72 are attached to a rear surface of the panel plate 61. The outer rails 72 are each substantially L-shaped as viewed from above in the Z-axis direction. Front surfaces of the outer rails 72 are connected to the rear surface of the panel plate 61. The outer rails 72 are each provided on an associated one of ends of the panel plate 61 in the Y-axis direction.

As illustrated in FIG. 6, the inner rails 71 are in engagement with the slide rails 70 such that the inner rails 71 are movable relative to the slide rails 70 in the Z-axis direction. A steel ball (not illustrated) to receive a load during sliding of the inner rails 71 and a retainer (not illustrated) retaining the steel ball are fitted between the inner rails 71 and the slide rails 70. As illustrated in FIG. 7, the inner rails 71 are attached to the outer rails 72. More specifically, one of the inner rails 71 is attached to a right surface of the left one of the two outer rails 72, and the other one of the inner rails 71 is attached to a left surface of the right one of the two outer rails 72. The inner rails 71 and the outer rails 72 are secured to each other with, for example, screws. Accordingly, movement of the inner rails 71 relative to the slide rails 70 (see FIG. 6) in the Z-axis direction results in movement of the slider cover 60 in the Z-axis direction. The movement of the slider cover 60 in the Z-axis direction covers or uncovers the first opening 12a and the second opening 12b.

As illustrated in FIG. 6, the urged member 73 is attached to a portion of the outer rail 72 located adjacent to its lower end. The urged member 73 transmits the urging force, which is applied by the constant load spring 78 (which will be described below), to the slider cover 60. In the present embodiment, the constant urging force is applied to the slider cover 60, which is exerted upward in the Z-axis direction, through the urged member 73 and the outer rail 72. The urged member 73 includes: the securer 73a substantially L-shaped and secured to the outer rail 72; the magnet 73b; and a placement surface 73c which is secured to the outer rail 72 and on which the magnet 73b is placed. Although described in detail below, the urged member 73 moves in the Z-axis direction together with the outer rail 72. In other words, the magnet 73b moves in the Z-axis direction.

The panel plate 61 is a plate member that defines a front surface of the slider cover 60 and extends in the Z-axis direction and the Y-axis direction. In the present embodiment, the panel plate 61 is made of acrylic resin. Alternatively, the panel plate 61 may be made of any other suitable material. As illustrated in FIG. 8, the panel plate 61 is provided with two windows 61a. With the first opening 12a (see FIG. 4) and the second opening 12b (see FIG. 4) covered by the slider cover 60, the windows 61a are each disposed at a location overlapping with an associated one of the first opening 12a and the second opening 12b in the X-axis direction. Accordingly, with the first opening 12a and the second opening 12b covered by the slider cover 60, the user is allowed to visually check the inside of the case body 10 through the windows 61a. In the present embodiment, a portion of the panel plate 61 in alignment with a below-mentioned screw 63a (see FIG. 9) in the X-axis direction is provided with a threaded hole (not illustrated) into which the screw 63a is to be secured.

The sheet metal 62 is provided behind the panel plate 61. The sheet metal 62 is an example of a metallic reinforcing member according to the present invention. In the present embodiment, the sheet metal 62 is provided adjacent to upper, lower, left, and right ends of the panel plate 61 and a portion of the panel plate 61 facing the pillar 10P (see FIG. 4). The portion of the panel plate 61 facing the pillar 10P is located at a substantially intermediate position in the Y-axis direction. The sheet metal 62, however, may be attached to any other suitable location(s). In the present embodiment, the outer rails 72 of the slider cover 60 are attached to the sheet metal 62. In the present embodiment, a portion of the sheet metal 62 in alignment with the screw 63a (which will be described below) in the X-axis direction is provided with a hole (not illustrated) through which the screw 63a is to be inserted.

FIG. 9 is a cross-sectional view of the slider cover 60 taken along the line A-A of FIG. 8. The resin washer 63 is disposed between the panel plate 61 and the sheet metal 62 in the X-axis direction. With the resin washer 63 disposed between the panel plate 61 and the sheet metal 62, the present embodiment involves fastening the panel plate 61, the sheet metal 62, and the resin washer 63 to each other with the screw 63a, with the result that the panel plate 61 and the sheet metal 62 are secured to each other, with the resin washer 63 interposed therebetween.

The spacers 64 are provided on a rear surface of the slider cover 60 and extend toward the pillar 10P. In the present embodiment, the spacers 64 are provided on a portion of the sheet metal 62 facing the pillar 10P. In the present embodiment, the number of spacers 64 is two, and the two spacers 64 are arranged in the Z-axis direction. As illustrated in FIG. 9, a length of each spacer 64 in the X-axis direction is shorter than a distance between the sheet metal 62 and the pillar 10P in the X-axis direction. The spacers 64 may be attached to the sheet metal 62 in any suitable method. In the present embodiment, the spacers 64 are attached to the sheet metal 62 by swaging.

FIG. 10 is a cross-sectional view of the slider cover 60 taken along the line B-B of FIG. 8. The extending plate 65 is attached to a rear surface of the sheet metal 62. As illustrated in FIG. 10, the extending plate 65 is substantially U-shaped in a side view. The extending plate 65 includes an extension 65a. The extension 65a defines an upper end of the extending plate 65 in the Z-axis direction. The extension 65a extends rearward from the rear surface of the slider cover 60. In the present embodiment, the extension 65a extends rearward from the rear surface of the sheet metal 62. In the present embodiment, a portion of the extension 65a extends into the machining chamber A1. More specifically, a portion of the extension 65a rearward of its substantially intermediate position in the X-axis direction is located inside the machining chamber A1. The extension 65a is located above the dustproof rubber 18 and the fibrous member 68 in the Z-axis direction.

As illustrated in FIG. 9, the rubber bushing 66 is disposed on a portion of the slider cover 60 facing the pillar 10P in the X-axis direction. The rubber bushing 66 is an example of an elastic member according to the present invention. In the present embodiment, the rubber bushing 66 is provided on the rear surface of the sheet metal 62. A length of the rubber bushing 66 in the X-axis direction is shorter than the distance between the sheet metal 62 and the pillar 10P in the X-axis direction.

The handle 67 is provided on the front surface of the slider cover 60 and at least partially overlaps with the rubber bushing 66 in the X-axis direction. The user grasps the handle 67 in opening and/or closing the slider cover 60. In the present embodiment, the handle 67 is attached to a front surface of the panel plate 61. In the present embodiment, a center of the handle 67 in the Z-axis direction and a center of the rubber bushing 66 in the Z-axis direction are disposed in alignment with each other in the X-axis direction. The handle 67 is substantially U-shaped in a side view. As illustrated in FIG. 1, the handle 67 extends in the Y-axis direction. In the present embodiment, a center of the handle 67 in the Y-axis direction is disposed to correspond to a center of the panel plate 61 in the Y-axis direction.

The fibrous member 68 illustrated in FIG. 8 is included in the slider cover 60 and includes fibers. In the present embodiment, the fibrous member 68 is attached to the rear surface of the sheet metal 62. Material(s) for the fibrous member 68 may be any suitable material(s). In the present embodiment, the fibrous member 68 is made of mohair. In the present embodiment, the fibrous member 68 includes a first portion 68a, a second portion 68b, a third portion 68c, and a fourth portion 68d. The first portion 68a is disposed above the associated window 61a and extends in the Y-axis direction. The second portion 68b is disposed leftward of the associated window 61a and extends in the Z-axis direction. The third portion 68c is disposed rightward of the associated window 61a and extends in the Z-axis direction. The fourth portion 68d is disposed below the associated window 61a and extends in the Y-axis direction. Because the fibrous member 68 includes the first to fourth portions 68a to 68d, the fibrous member 68 has a rectangular shape. As illustrated in FIG. 10, the fourth portion 68d of the fibrous member 68 is disposed in front of the dustproof rubber 18 in the X-axis direction. The fourth portion 68d is attached to the extending plate 65 at a location below the extension 65a. As illustrated in FIG. 10, the fourth portion 68d of the fibrous member 68 is disposed in alignment with the dustproof rubber 18 in the X-axis direction, with the first opening 12a covered by the slider cover 60. Alternatively, the fourth portion 68d of the fibrous member 68 may be partially disposed in alignment with the dustproof rubber 18 in the X-axis direction, with the first opening 12a covered by the slider cover 60. Although the slider cover 60 includes the fibrous member 68 in the present embodiment, the present invention is not limited to this arrangement. Alternatively, the slider cover 60 may include the dustproof rubber 18, and the fibrous member 68 may be disposed at a location on the lower end of the first opening 12a.

The frame 69 surrounds ends of the panel plate 61 and the sheet metal 62 in the Y-axis direction and the Z-axis direction. The panel plate 61 and the sheet metal 62 are secured to the frame 69.

The above description has discussed the arrangement of the cutting machine 100 according to the present embodiment. The following description discusses operations involving opening of the slider cover 60. The following description focuses on the time after the workpiece 5 has been machined in the machining chamber A1. As illustrated in FIG. 10, cutting powder CP that has scattered during cutting of the workpiece 5 (see FIG. 5) adheres to the rear surfaces of the panel plate 61 and the sheet metal 62, i.e., surfaces of the panel plate 61 and the sheet metal 62 facing the machining chamber A1. The cutting powder CP accumulates on an upper surface of the extension 65a of the extending plate 65.

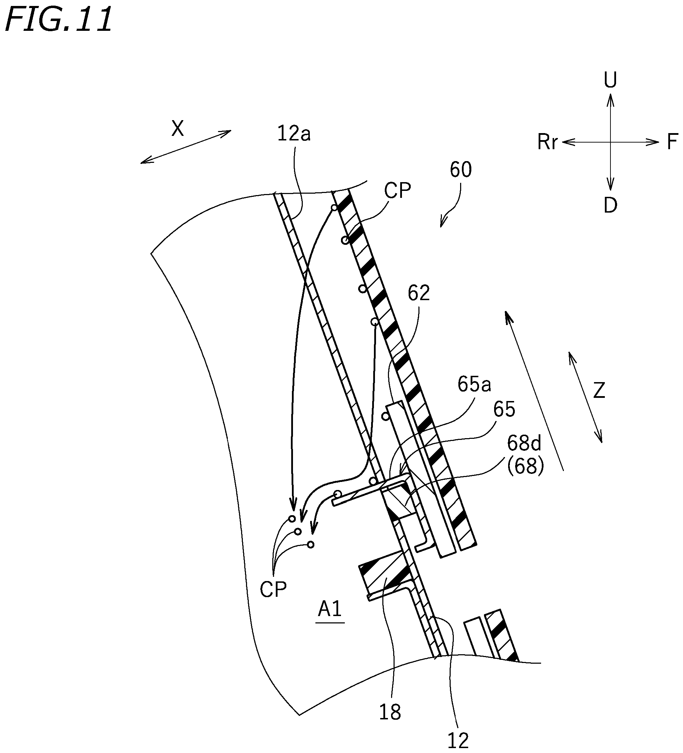

In the state illustrated in FIG. 10, the user grasps the handle 67 (see FIG. 9) and pulls the slider cover 60 upward in the Z-axis direction, with the result that the inner rails 71 (see FIG. 6) move upward in the Z-axis direction along the slide rails 70 (see FIG. 6). The slider cover 60 including the inner rails 71 thus moves upward together with the inner rails 71. Upon upward movement of the slider cover 60 in the Z-axis direction, the first opening 12a and the second opening 12b (see FIG. 4) are uncovered. In other words, rearward and upward movement of the slider cover 60 uncovers the first opening 12a and the second opening 12b. FIG. 11 is a cross-sectional view of a portion of the cutting machine 100 located adjacent to the slider cover 60, with the first opening 12a uncovered. In this state, the cutting powder CP adhering to the rear surfaces of the panel plate 61 and the sheet metal 62 falls down. When the slider cover 60 is located in front of the first opening 12a and the first opening 12a is to be uncovered, the slider cover 60 moves rearward and upward, which causes the cutting powder CP that has fallen down from the slider cover 60 to fall down into the machining chamber A1 through the first opening 12a. In this case, some of the cutting powder CP that has fallen down from the slider cover 60 falls down onto the upper surface of the extension 65a, travels rearward along the extension 65a, and then falls down into the machining chamber A1. The cutting powder CP that has accumulated on the extension 65a before the first opening 12a is uncovered also travels rearward along the extension 65a and then falls down into the machining chamber A1.

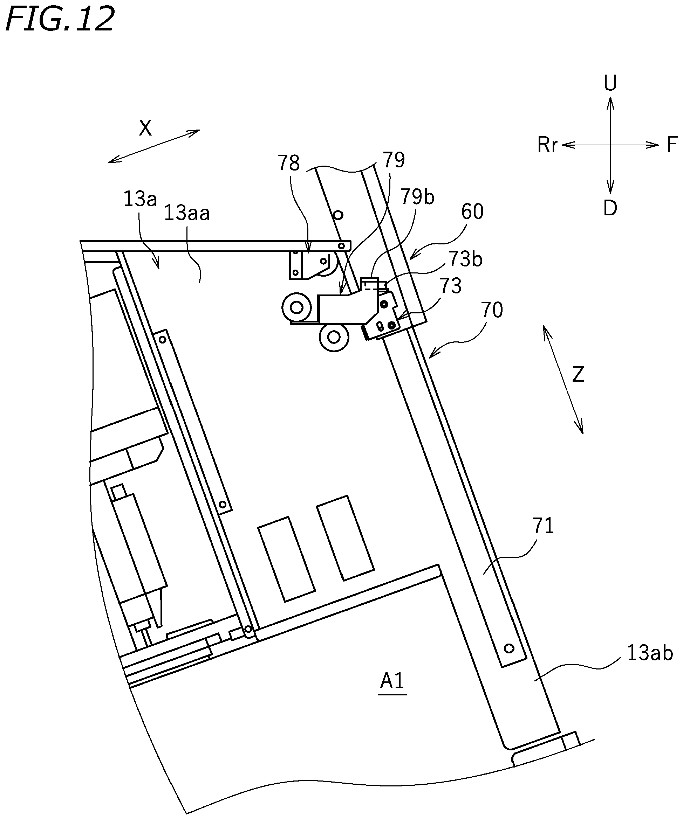

FIG. 12 is a diagram illustrating a portion of the cutting machine 100 located adjacent to the left inner wall 13a, with the slider cover 60 moved to its uppermost position. As illustrated in FIG. 12, the magnet 73b of the urged member 73 is suctioned onto the magnetic body 79b of the locking unit 79. In this case, if the user releases his or her hand from the handle 67, the slider cover 60 would not move downward, and the user would thus be able to keep the first opening 12a and the second opening 12b uncovered.

In the cutting machine 100 according to the present embodiment, the cutting powder CP adheres to portion(s) of the slider cover 60 facing the machining chamber A1 upon machining of the workpiece 5 in the machining chamber A1 as described above. The slider cover 60 is in engagement with the slide rails 70, each extending from front rearward and from below upward, and is movable along the slide rails 70. Upon rearward and upward movement of the slider cover 60, the first opening 12a is uncovered. The slider cover 60 is provided in front of the first opening 12a. Accordingly, if the cutting powder CP adheres to the slider cover 60, the cutting powder CP that falls down from the slider cover 60 during opening and/or closing of the slider cover 60 falls down into the machining chamber A1 through the first opening 12a. One of the slide rails 70 is provided leftward of the first opening 12a, and the other slide rail 70 is provided rightward of the first opening 12a. The cutting powder CP that has scattered forward of the first opening 12a during machining of the workpiece 5 is thus prevented from adhering to the slide rails 70. Consequently, the cutting powder CP is prevented from spilling out of the cutting machine 100.

In the cutting machine 100 according to the present embodiment, the extending plate 65 attached to the rear surface of the sheet metal 62 includes the extension 65a. The extension 65a extends rearward from the rear surface of the slider cover 60. Accordingly, some of the cutting powder CP adhering to the rear surface of the slider cover 60 accumulates on the extension 65a. The cutting powder CP is thus prevented from falling down along the rear surface of the slider cover 60 and spilling out of the cutting machine 100. Consequently, the cutting powder CP is more unlikely to spill out of the cutting machine 100.

In the cutting machine 100 according to the present embodiment, a rear portion of the extension 65a extends into the machining chamber A1. Accordingly, the cutting powder CP that has accumulated on the extension 65a falls into the machining chamber A1 upon falling down from the extension 65a. Consequently, the cutting powder CP is more unlikely to spill out of the cutting machine 100.

In the cutting machine 100 according to the present embodiment, the slider cover 60 includes the panel plate 61 and the sheet metal 62 provided behind the panel plate 61. This increases the rigidity of the slider cover 60. Accordingly, the slider cover 60 is prevented from rattling, for example, when the user moves the slider cover 60. In other words, the slider cover 60 is opened and/or closed with stability.

In the cutting machine 100 according to the present embodiment, the slider cover 60 includes the resin washer 63 disposed between the panel plate 61 and the sheet metal 62 in the front-rear direction. The sheet metal 62 is thus attached to the panel plate 61, with the resin washer 63 interposed therebetween. If the sheet metal 62 is directly attached to the rear surface of the panel plate 61, a difference in thermal expansion coefficient between the panel plate 61 and the sheet metal 62, which occurs upon a change in ambient temperature, for example, may result in distortion of the panel plate 61 and/or the sheet metal 62. When the slider cover 60 includes the resin washer 63 between the panel plate 61 and the sheet metal 62 as in the present embodiment, however, thermal expansion or thermal contraction of the panel plate 61 and/or the sheet metal 62 deforms the resin washer 63. Accordingly, the resin washer 63 absorbs a deformation caused by volume change(s) of the panel plate 61 and/or the sheet metal 62. Consequently, the distortion of the panel plate 61 and the sheet metal 62 is preventable.

In the cutting machine 100 according to the present embodiment, the slider cover 60 includes the fibrous member 68. The case body 10 includes the dustproof rubber 18 at a location on the lower end of the first opening 12a. With the first opening 12a covered by the slider cover 60, the dustproof rubber 18 and the fibrous member 68 are at least partially disposed adjacent to each other in the X-axis direction. Because the dustproof rubber 18 and the fibrous member 68 are at least partially adjacent to each other in the front-rear direction, the cutting powder CP would adhere to the dustproof rubber 18 or the fibrous member 68 if the cutting powder CP spills from the first opening 12a. The cutting powder CP is thus prevented from spilling out of the cutting machine 100. During opening and/or closing of the slider cover 60, the fibrous member 68 moves while being in contact with the dustproof rubber 18. When the slider cover 60 includes, for example, a dustproof rubber member instead of the fibrous member 68, the dustproof rubber member moves while being in contact with the dustproof rubber 18. In this case, a frictional force generated between the dustproof rubber member and the dustproof rubber 18 is relatively large, which interferes with movement of the slider cover 60. In the present embodiment, however, the slider cover 60 includes the fibrous member 68 including fibers, with the result that a frictional force generated between the dustproof rubber 18 and the fibrous member 68 is relatively small. Such a relatively small frictional force between the dustproof rubber 18 and the fibrous member 68 is unlikely to interfere with movement of the slider cover 60. Consequently, the cutting machine 100 according to the present embodiment has such a structure that prevents, with the fibrous member 68 and the dustproof rubber 18, spilling of the cutting powder CP and is unlikely to interfere with movement of the slider cover 60.

In the cutting machine 100 according to the present embodiment, the case body 10 includes the pillar 10P extending in the up-down direction. The rear surface of the sheet metal 62 of the slider cover 60 is provided with the spacers 64 extending toward the pillar 10P. Thus, deflection of the slider cover 60 would be kept at or below a certain level if, for example, the slider cover 60 is relatively strongly pushed rearward. Consequently, breakage of the slider cover 60 is preventable.

In the cutting machine 100 according to the present embodiment, the case body 10 includes the pillar 10P extending in the up-down direction. The slider cover 60 includes the rubber bushing 66 at a location facing the pillar 10P. The slider cover 60 further includes the handle 67 which is provided on the front surface of the slider cover 60 and at least a portion of which overlaps with the rubber bushing 66 in the front-rear direction. If a relatively strong rearward force is applied to the slider cover 60 when the user grasps the handle 67 and moves the slider cover 60, the slider cover 60 may be broken. Providing the handle 67 and the rubber bushing 66 as in the present embodiment, however, prevents the slider cover 60 from being broken during movement of the slider cover 60. The degree of deflection of the slider cover 60 caused by application of a rearward force to the slider cover 60 is maximized when the force is applied to a central position on the slider cover 60 in the Y-axis direction. In other words, when the handle 67 is disposed at a center of the slider cover 60 in the Y-axis direction, the slider cover 60 is vulnerable to breakage. Providing the rubber bushing 66 as in the present embodiment, however, would make the slider cover 60 resistant to breakage if the handle 67 is disposed at the center of the slider cover 60 in the Y-axis direction.

The preferred embodiments of the present invention have been described thus far. The above-described embodiments, however, are only illustrative. The present invention may be embodied in various forms.

## Claims

1. A cutting machine (100) comprising:
a case body (10) internally provided with a machining chamber (A1) in which a workpiece (5) is to be cut, the case body (10) including an opening (12a) defined in front of the machining chamber (A1);
a slider cover (60) which is provided in front of the case body (10) and is able to cover and uncover the opening (12a); and
a slide rail (70) which is provided on a portion of the case body (10) located laterally of the opening (12a) and with which the slider cover (60) is in engagement, the slide rail (70) extending from front rearward and from below upward, wherein
the opening (12a) is uncovered upon rearward and upward movement of the slider cover (60).

2. The cutting machine (100) according to claim 1, wherein the slider cover (60) includes an extension (65a) extending rearward from a rear surface of the slider cover (60).

3. The cutting machine (100) according to claim 2, wherein a portion of the extension (65a) extends into the machining chamber (A1).

4. The cutting machine (100) according to any one of claims 1 to 3, wherein the slider cover (60) includes
a panel plate (61), and
a metallic reinforcing member (62) provided behind the panel plate (61).

5. The cutting machine (100) according to claim 4, wherein the slider cover (60) includes a resin washer (63) disposed between the panel plate (61) and the metallic reinforcing member (62) in a front-rear direction.

6. The cutting machine (100) according to any one of claims 1 to 5, wherein
the slider cover (60) includes either one of a fibrous member (68) including fibers and a dustproof rubber (18) to prevent scattering of cutting powder (CP),
the case body (10) includes the other one of the fibrous member (68) and the dustproof rubber (18) at a location on a lower end of the opening (12a), and
the fibrous member (68) and the dustproof rubber (18) are at least partially disposed adjacent to each other in a front-rear direction, with the opening (12a) covered by the slider cover (60).

7. The cutting machine (100) according to any one of claims 1 to 6, wherein
the case body (10) includes a pillar (10P) extending in an up-down direction, and
the slider cover (60) includes a spacer (64) provided on a rear surface of the slider cover (60) and extending toward the pillar (10P).

8. The cutting machine (100) according to any one of claims 1 to 6, wherein
the case body (10) includes a pillar (10P) extending in an up-down direction, and
the slider cover (60) includes
an elastic member (66) provided at a location facing the pillar (10P) in a front-rear direction, and
a handle (67) which is provided on a front surface of the slider cover (60) and at least a portion of which overlaps with the elastic member (66) in the front-rear direction.
